# EUROPEAN PATENT APPLICATION

(11) **EP 4 422 085 A1**
(43) Date of publication of application: **28.08.2024**
(21) Application number: 24152438.8
(22) Date of filing: 17.01.2024
(51) Int. Cl.: H04B 7/0452, H04B 7/0456, H04B 7/06, H04B 7/08

(54) **TRIGGER-BASED IMPLICIT FEEDBACK FOR IMPLICIT BEAMFORMING IN WIRELESS COMMUNICATIONS**

(30) Priority: 24.02.2023 US 202363486672 P; 28.12.2023 US 202318398160
(71) Applicant: MediaTek Inc., 30078 Hsinchu City (TW)
(72) Inventor: HSIEH, Cheng-En, Hsinchu City (TW); TSENG, Ming-Hsiang, Hsinchu City (TW); WU, Kang-Li, Hsinchu City (TW); LIN, Shih-Wei, Hsinchu City (TW); YU, Hao-Chih, Hsinchu City (TW); KUO, Ching-Yu, Hsinchu City (TW); HSIEH, Hung-Tao, Hsinchu City (TW)
(74) Representative: Patentship Patentanwaltsgesellschaft mbH

(57) **Abstract**

Techniques pertaining to trigger-based (TB) implicit feedback for implicit beamforming in wireless communications are described. An apparatus (610), e.g., an access point (AP), triggers each of one or more stations (STAs, 620) to transmit a respective feedback. The apparatus (610) estimates a respective steering matrix with respect to each of the one or more STAs (620) based on the respective feedback. The apparatus (610) then transmits a respective steered data to each of the one or more STAs (620) based on the respective steering matrix.

## Description

### TECHNICAL FIELD

The present disclosure is generally related to wireless communications and, more particularly, to trigger-based (TB) implicit feedback for implicit beamforming in wireless communications.

### BACKGROUND

Unless otherwise indicated herein, approaches described in this section are not prior art to the claims listed below and are not admitted as prior art by inclusion in this section.

In wireless communications such as WiFi (or Wi-Fi) and wireless local area networks (WLANs) in accordance with upcoming Institute of Electrical and Electronics Engineers (IEEE) 802.11 standard(s), beamforming are techniques used by a station (STA) with multiple antennas to steer signals to improve throughput. At the present time, most of STAs on the market only support a maximum number of four of sounding dimensions as a STA's explicit beamformee capability. In case that an access point (AP) intends to use spare antennas more than the STA's supported maximum number of sounding dimensions to apply a steer matrix to achieve more transmit (Tx) beamforming gain, the AP would need to develop its implicit Tx beamforming. However, there is no implicit feedback frame exchange sequence between the AP and the STA defined in the specifications for Wi-Fi 6 and Wi-Fi 7. Moreover, there is currently a high-throughput (HT) physical-layer protocol data unit (PPDU) exchange defined for implicit transmit beamforming, yet it is optional and there is almost no STA supporting this option. As such, there is no way to control of receiving (Rx) number of space-time streams (Nₛₜₛ) and bandwidth of a Rx PPDU in order to obtain full characterization of a multiple-input-multiple-output (MIMO) channel. Therefore, there is a need for a solution of TB implicit feedback for implicit beamforming in wireless communications to realize implicit Tx beamforming.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to TB implicit feedback for implicit beamforming in wireless communications. For instance, one or more of the proposed schemes may be based on a trigger frame which is a mandatory frame in Wi-Fi 6, Wi-Fi 7 and beyond, and the proposed schemes may be compatible with all Wi-Fi STAs compliant with Wi-Fi 6 and beyond. Moreover, TB-sounding under the proposed schemes may avoid any additional sounding overhead. It is believed that aforementioned issue(s) may be avoided or otherwise alleviated by implementation of one or more of the various proposed schemes described herein. Implementations of one or more of the proposed schemes may achieve implicit Tx beamforming in Wi-Fi 6, Wi-Fi 7 and beyond.

In one aspect, a method may involve an AP triggering each of one or more STAs to transmit a respective feedback. Additionally, the method may involve the AP estimating a respective steering matrix with respect to each of the one or more STAs based on the respective feedback.

In another aspect, an apparatus may include a transceiver and a processor coupled to the transceiver. The transceiver may be configured to communicate wirelessly. The processor may trigger each of one or more STAs to transmit a respective feedback. The processor may also estimate a respective steering matrix with respect to each of the one or more STAs based on the respective feedback.

More specifically, a first aspect of the invention is related to a method, comprising: triggering, by a processor of an apparatus, each of one or more stations (STAs) to transmit a respective feedback; and estimating, by the processor, a respective steering matrix with respect to each of the one or more STAs based on the respective feedback.

In a first embodiment of the first aspect, the triggering comprises controlling a number of space-time streams (Nₛₜₛ) and an uplink bandwidth (UL BW) of a respective trigger-based physical-layer protocol data unit (TB-PPDU) transmitted by each of the one or more STAs as the respective feedback. In a second embodiment of the first aspect in combination with the first embodiment of the first aspect, the controlling of the number of Nₛₜₛ and the UL BW of the respective TB-PPDU comprises indicating the number of Nₛₜₛ and the UL BW in a user information field of a respective trigger frame transmitted to each of the one or more STAs. In a third embodiment of the first aspect in combination with the second embodiment of the first aspect, the respective trigger frame comprises a basic trigger frame, a buffer status report poll (BSRP), a beamforming report poll (BFRP), a bandwidth query report poll (BQRP), or a null data packet (NDP) feedback report poll (NFRP). In a fourth embodiment of the first aspect in combination with the first embodiment of the first aspect, the estimating of the respective steering matrix comprises calculating a full characterization of a multiple-input-multiple-output (MIMO) channel in which the respective feedback is transmitted based on the respective TB-PPDU. In a fifth embodiment of the first aspect, the triggering of each of the one or more STAs comprises transmitting to each of the one or more STAs: a null data packet announcement (NDPA); a null data packet (NDP); and a respective trigger frame. In a sixth embodiment of the first aspect in combination with the fifth embodiment of the first aspect, responsive to the one or more STAs comprising multiple STAs, the NDPA comprises a respective association identifier (AID) of each of the multiple STAs, and responsive to the one or more STAs comprising a single STA, the NDPA comprises a first AID of the single STA and a second AID from one or more reserved AIDs. In a seventh embodiment of the first aspect, a communication between the apparatus and the one or more STAs involves either a single-link operation (SLO) or a multi-link operation (MLO). In an eighth embodiment of the first aspect, the one or more STAs comprise one or more STAs compliant with Wi-Fi 6, Wi-Fi 7, Wi-Fi 8, or another Wi-Fi standard based on an Institute of Electrical and Electronics Engineers (IEEE) 802.11 specification beyond Wi-Fi 8. In a ninth embodiment of the first aspect, the method further comprises: transmitting, by the processor, a respective steered data to each of the one or more STAs based on the respective steering matrix.

A second aspect of the invention is related to an apparatus, comprising: a transceiver configured to communicate wirelessly; and a processor coupled to the transceiver and configured to perform operations comprising: triggering, via the transceiver, each of one or more stations (STAs) to transmit a respective feedback; and estimating a respective steering matrix with respect to each of the one or more STAs based on the respective feedback.

In a first embodiment of the second aspect, the triggering comprises controlling a number of space-time streams (Nₛₜₛ) and an uplink bandwidth (UL BW) of a respective trigger-based physical-layer protocol data unit (TB-PPDU) transmitted by each of the one or more STAs as the respective feedback. In a second embodiment of the second aspect in combination with the first embodiment of the second aspect, the controlling of the number of Nₛₜₛ and the UL BW of the respective TB-PPDU comprises indicating the number of Nₛₜₛ and the UL BW in a user information field of a respective trigger frame transmitted to each of the one or more STAs. In a third embodiment of the second aspect in combination with the second embodiment of the second aspect, the respective trigger frame comprises a basic trigger frame, a buffer status report poll (BSRP), a beamforming report poll (BFRP), a bandwidth query report poll (BQRP), or a null data packet (NDP) feedback report poll (NFRP). In a fourth embodiment of the second aspect in combination with the first embodiment of the second aspect, the estimating of the respective steering matrix comprises calculating a full characterization of a multiple-input-multiple-output (MIMO) channel in which the respective feedback is transmitted based on the respective TB-PPDU. In a fifth embodiment of the second aspect, the triggering of each of the one or more STAs comprises transmitting to each of the one or more STAs: a null data packet announcement (NDPA); a null data packet (NDP); and a respective trigger frame. In a sixth embodiment of the second aspect in combination with the fifth embodiment of the second aspect, responsive to the one or more STAs comprising multiple STAs, the NDPA comprises a respective association identifier (AID) of each of the multiple STAs, and responsive to the one or more STAs comprising a single STA, the NDPA comprises a first AID of the single STA and a second AID from one or more reserved AIDs. In a seventh embodiment of the second aspect, a communication between the apparatus and the one or more STAs involves either a single-link operation (SLO) or a multi-link operation (MLO). In an eighth embodiment of the second aspect, the one or more STAs comprise one or more STAs compliant with Wi-Fi 6, Wi-Fi 7, Wi-Fi 8, or another Wi-Fi standard based on an Institute of Electrical and Electronics Engineers (IEEE) 802.11 specification beyond Wi-Fi 8. In a ninth embodiment of the second aspect, the processor is further configured to perform operations comprising: transmitting, via the transceiver, a respective steered data to each of the one or more STAs based on the respective steering matrix.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example design under a proposed scheme in accordance with the present disclosure.
FIG. 5 is a diagram of an example design under a proposed scheme in accordance with the present disclosure.
FIG. 6 is a block diagram of an example communication system in accordance with an implementation of the present disclosure.
FIG. 7 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to TB implicit feedback for implicit beamforming in wireless communications. According to the present disclosure, a number of possible solutions may be implemented separately or jointly. That is, although these possible solutions may be described below separately, two or more of these possible solutions may be implemented in one combination or another.

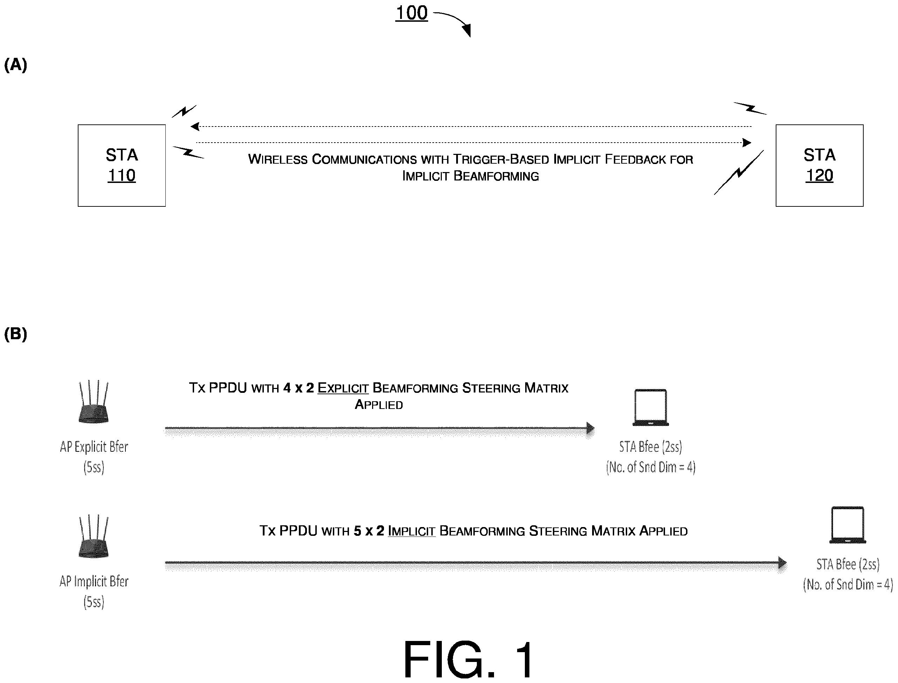

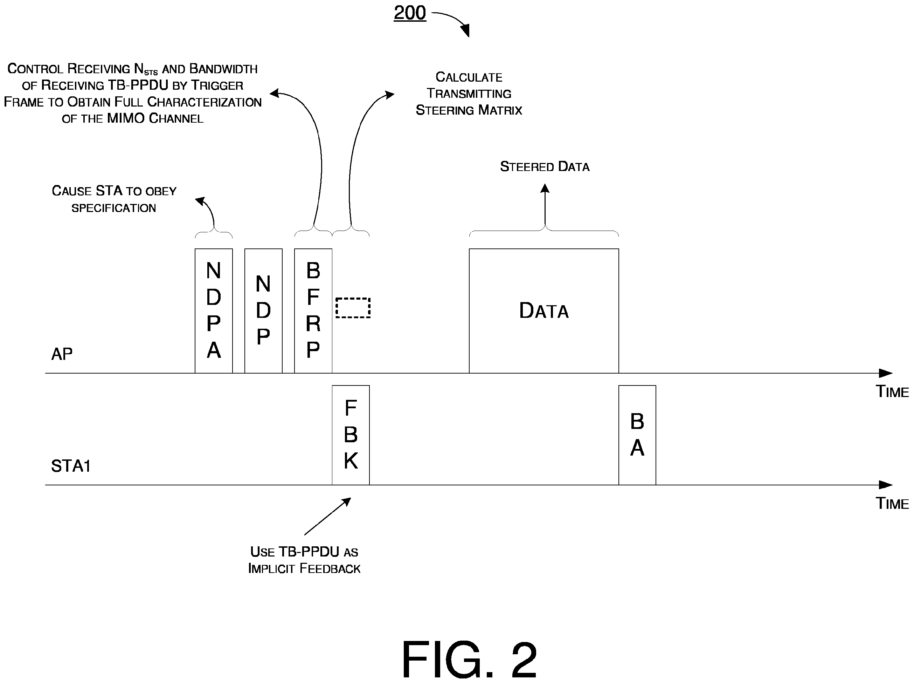

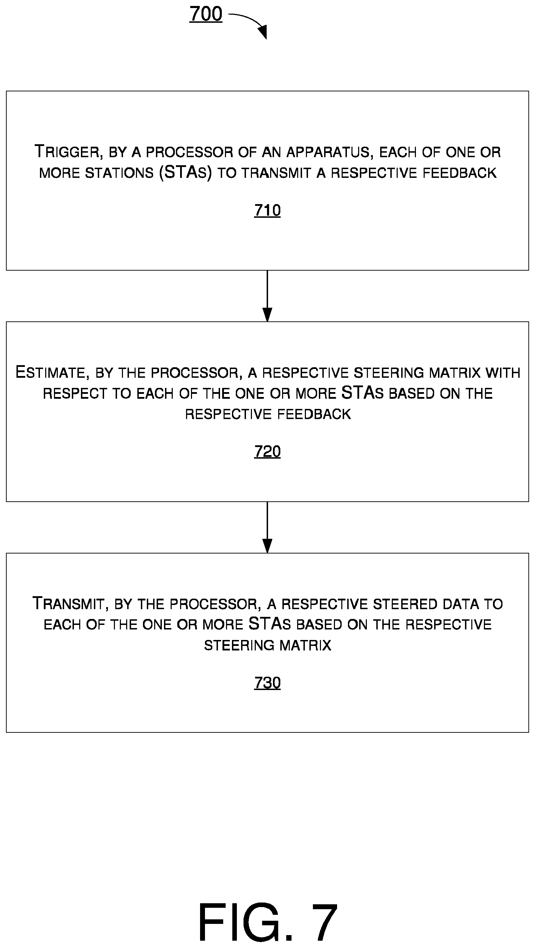

FIG. 1 illustrates an example network environment 100 in which various solutions and schemes in accordance with the present disclosure may be implemented. FIG. 2 ∼ FIG. 7 illustrate examples of implementation of various proposed schemes in network environment 100 in accordance with the present disclosure. The following description of various proposed schemes is provided with reference to FIG. 1 ~ FIG. 7.

Referring to part (A) of FIG. 1, network environment 100 may involve at least a STA 110 communicating wirelessly with a STA 120. Either of STA 110 and STA 120 may be an AP STA or, alternatively, either of STA 110 and STA 120 may function as a non-AP STA. STA 110 and STA 120 may be configured or otherwise capable to operate in accordance with the same or different IEEE 802.11 standard(s) (e.g., Wi-Fi 7 and Wi-Fi 8 as well as future-developed standards). Each of STA 110 and STA 120 may be configured to communicate with each other by utilizing the techniques pertaining to TB implicit feedback for implicit beamforming in wireless communications in accordance with various proposed schemes described below. Referring to part (B) of FIG. 1, under current IEEE 802.11 specifications, when an AP has more antennas (and hence spatial-time streaming capability) than does a STA (e.g., AP as a beamformer having a capability of five spatial streams (5ss) while STA as a beamformee having a capability of two spatial streams (2ss) and a maximum number of four of sounding dimensions), the AP could only perform explicit beamforming that is limited by the STA's capability. That is, in this example the AP would transmit PPDU(s) by applying a 4 x 2 explicit beamforming steering matrix. In contrast, under various proposed schemes in accordance with the present disclosure, in this example the AP may transmit PPDU(s) by applying a 5 x 2 implicit beamforming steering matrix. Advantageously, in this example, the throughput gain of implicit beamforming is larger than that of explicit beamforming when the AP's maximum number of spatial streams (Nₛₛ) is greater than 4 and the STA's number of sounding dimension is less than or equal to 4. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

Under various proposed schemes in accordance with the present disclosure, a trigger-based implicit feedback for implicit Tx beamforming may be utilized to realize implicit Tx beamforming in APs in compliance with Wi-Fi 6, Wi-Fi 7 and future Wi-Fi standards. One or more of the proposed schemes may be based on a trigger frame which is a mandatory frame after Wi-Fi 6, including Wi-Fi 6 and Wi-Fi 7 and future-generation Wi-Fi. The proposed schemes may be compatible with all Wi-Fi STAs compliant with Wi-Fi standards after Wi-Fi 6. Moreover, TB-sounding may be utilized in the proposed schemes, thereby avoiding any additional sounding overhead.

FIG. 2 illustrates an example scenario 200 under a proposed scheme in accordance with the present disclosure. Scenario 200 may pertain to an example of TB implicit feedback for a single user, and this may be implemented by TB-sounding as an illustrative and non-limiting example. Referring to FIG. 2, TB implicit feedback may be implemented by an AP (e.g., STA 110) and a single STA (e.g., STA 120), shown as STA1. In scenario 200, communications between the AP and STA1 may involve either a single-link operation (SLO) or a multi-link operation (MLO). Moreover, each of the AP and STA1 may be compliant with Wi-Fi 6, Wi-Fi 7, Wi-Fi 8, or another Wi-Fi standard based on an IEEE 802.11 specification beyond Wi-Fi 8.

Under the proposed scheme, the AP may trigger STA1 to transmit a feedback and, based on the feedback, the AP may estimate a steering matrix with respect to STA1. Based on the steering matrix, the AP may transmit a steered data to STA1 and, in response, the AP may receive a block acknowledgement (BA) from STA1. Under the proposed scheme, the AP may trigger STA1 to transmit the feedback by transmitting to STA1 at least one of the following: a null data packet announcement (NDPA), a null data packet (NDP), and a trigger frame. The trigger frame may be or include a basic trigger frame, a buffer status report poll (BSRP), a beamforming report poll (BFRP), a bandwidth query report poll (BQRP), or a null data packet (NDP) feedback report poll (NFRP). In scenario 200, since there is only one single STA, namely STA1, the NDPA may include a first AID of the single STA and a second AID from one or more reserved AIDs (e.g., used as a fake STA) so as to comply with pertinent IEEE 802.11 specification(s).

Under the proposed scheme, in triggering STA1, the AP may control a number of Rx Nₛₜₛ and an uplink bandwidth (UL BW) of a trigger-based physical-layer protocol data unit (TB-PPDU) transmitted by STA1 as the feedback. For instance, in controlling the number of Rx Nₛₜₛ and the UL BW of the TB-PPDU, the AP may indicate the number of Rx Nₛₜₛ and the UL BW in a user information field of the trigger frame transmitted to STA1. Under the proposed scheme, in estimating the steering matrix, the AP may calculate a full characterization of a MIMO channel in which the feedback is transmitted based on the TB-PPDU.

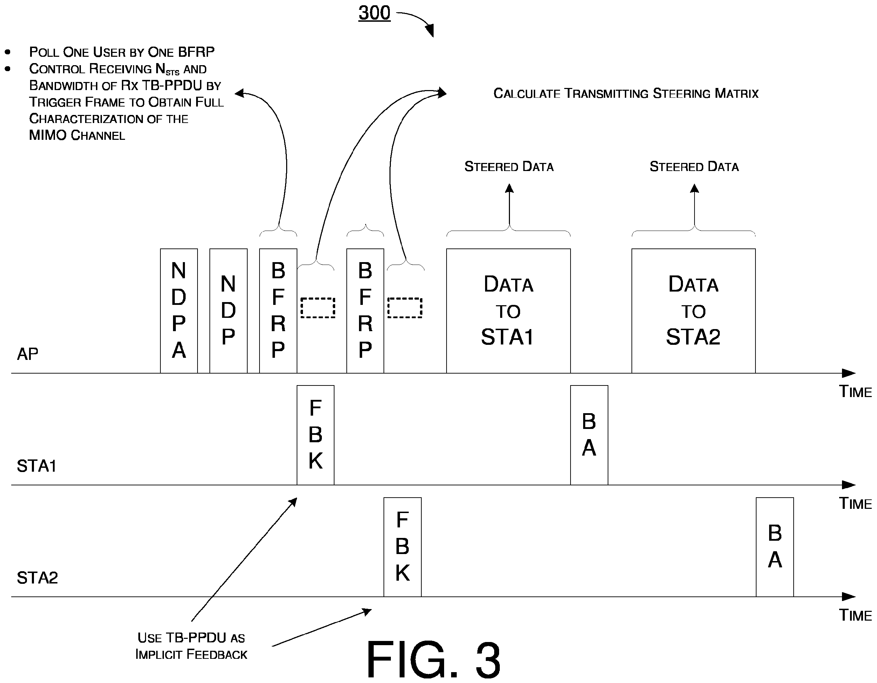

FIG. 3 illustrates an example scenario 300 under a proposed scheme in accordance with the present disclosure. Scenario 300 may pertain to an example of TB implicit feedback for multiple users, and this may be implemented by TB-sounding as an illustrative and non-limiting example. Referring to FIG. 3, TB implicit feedback may be implemented by an AP (e.g., STA 110) and at least a first STA (e.g., STA 120), shown as STA1, and a second STA, shown as STA2. For simplicity, although scenario 300 may be implemented with more than two STAs, a quantity of two of STAs are shown in FIG. 3 for simplicity in illustration of the inventive concept. In scenario 300, communications between the AP, STA1 and STA2 may involve either a SLO or an MLO. Moreover, each of the AP, STA1 and STA2 may be compliant with Wi-Fi 6, Wi-Fi 7, Wi-Fi 8, or another Wi-Fi standard based on an IEEE 802.11 specification beyond Wi-Fi 8.

Under the proposed scheme, the AP may trigger each of STA1 and STA2 to transmit a respective feedback and, based on the respective feedback, the AP may estimate a respective steering matrix with respect to each of STA1 and STA2. Based on the respective steering matrix, the AP may transmit a respective steered data to each of STA1 and STA2 and, in response, the AP may receive a respective BA from each of STA1 and STA2. Under the proposed scheme, the AP may trigger each of STA1 and STA2 to transmit the respective feedback by transmitting to each of STA1 and STA2 at least one of the following: an NDPA, an NDP, and a respective trigger frame. The trigger frame may be or include a basic trigger frame, a BSRP, a BFRP, a BQRP, or an NFRP. In scenario 300, since there are multiple STAs, including STA1 and STA2, the NDPA may include a respective AID of each of the multiple STAs (e.g., AID1 for STA1 and AID2 for STA2).

Under the proposed scheme, in triggering each of STA1 and STA2, the AP may control a respective number of Rx Nₛₜₛ and a respective UL BW of a respective TB-PPDU transmitted by each of STA1 and STA2as the respective feedback. For instance, in controlling the respective number of Rx Nₛₜₛ and the respective UL BW of the respective TB-PPDU, the AP may indicate the number of Rx Nₛₜₛ and the UL BW in a user information field of the respective trigger frame transmitted to each of STA1 and STA2. Under the proposed scheme, in estimating the respective steering matrix, the AP may calculate a full characterization of a respective MIMO channel in which the respective feedback is transmitted based on the respective TB-PPDU.

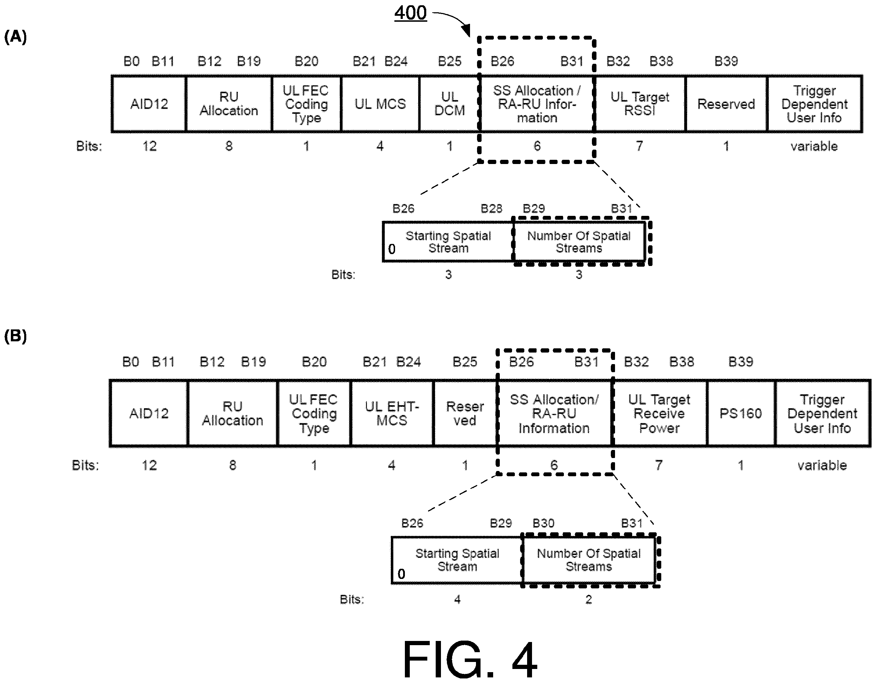

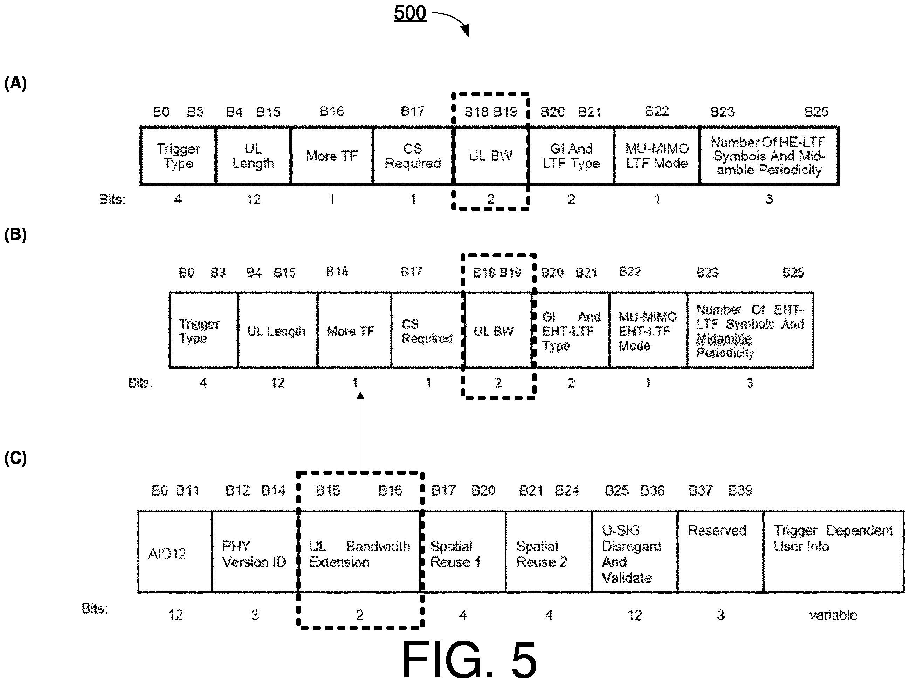

FIG. 4 and FIG. 5 illustrate example designs 400 and 500 under a proposed scheme in accordance with the present disclosure. Designs 400 and 500 may pertain to indication of the number of Rx Nₛₜₛ and an UL BW by a trigger frame. Part (A) of each of FIG. 4 and FIG. 5 may pertain to an example of a high-efficiency (HE) trigger frame (e.g., used in Wi-Fi 6). Part (B) of each of FIG. 4 and FIG. 5 may pertain to an example of an extremely-high-throughput (EHT) trigger frame (e.g., used in Wi-Fi 7). Referring to part (A) and part (B) of FIG. 4, the number of Rx Nₛₜₛ may be indicated in a User Info field of the trigger frame. For instance, such information may be indicated in a "Number Of Spatial Streams" subfield of a "SS Allocation/ RA-RU Information" field of the trigger frame. Referring to part (A) and part (B) of FIG. 5, the UL BW may be indicated in the User Info field of the trigger frame. For instance, such information may be indicated in a "UL BW" field of the trigger frame. Referring to part (C) of FIG. 5, the UL BW may also or alternatively indicate in a Special User Info field of the trigger frame. For instance, such information may be indicated in a "UL Bandwidth Extension" field of the trigger frame.

### Illustrative Implementations

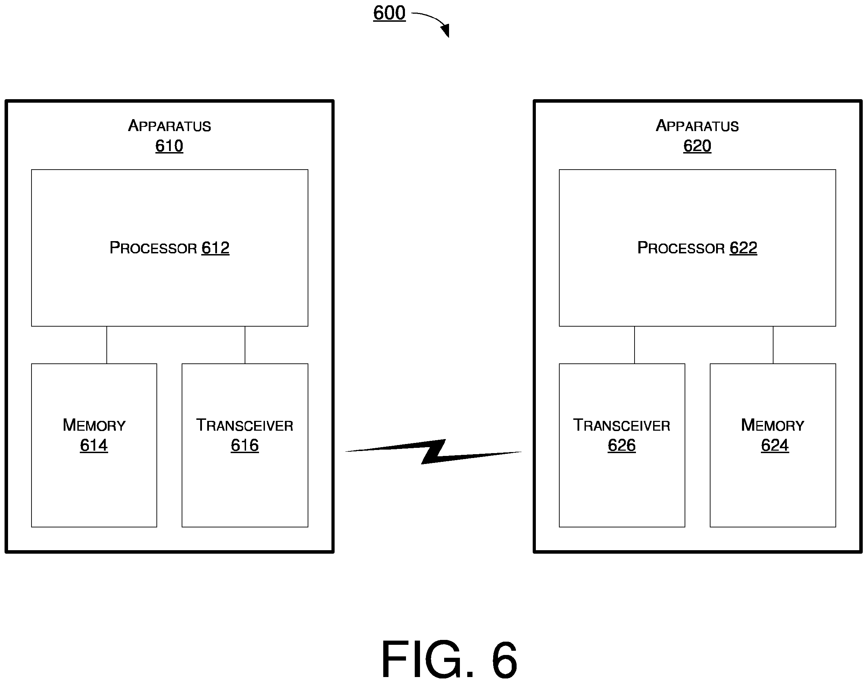

FIG. 6 illustrates an example system 600 having at least an example apparatus 610 and an example apparatus 620 in accordance with an implementation of the present disclosure. Each of apparatus 610 and apparatus 620 may perform various functions to implement schemes, techniques, processes and methods described herein pertaining to TB implicit feedback for implicit beamforming in wireless communications, including the various schemes described above with respect to various proposed designs, concepts, schemes, systems and methods described above as well as processes described below. For instance, apparatus 610 may be implemented in STA 110 and apparatus 620 may be implemented in STA 120, or vice versa.

Each of apparatus 610 and apparatus 620 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 610 and apparatus 620 may be implemented in a smartphone, a smart watch, a personal digital assistant, a digital camera, or a computing equipment such as a tablet computer, a laptop computer or a notebook computer. Each of apparatus 610 and apparatus 620 may also be a part of a machine type apparatus, which may be an IoT apparatus such as an immobile or a stationary apparatus, a home apparatus, a wire communication apparatus or a computing apparatus. For instance, each of apparatus 610 and apparatus 620 may be implemented in a smart thermostat, a smart fridge, a smart door lock, a wireless speaker or a home control center. When implemented in or as a network apparatus, apparatus 610 and/or apparatus 620 may be implemented in a network node, such as an AP in a WLAN.

In some implementations, each of apparatus 610 and apparatus 620 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 610 and apparatus 620 may be implemented in or as a STA or an AP. Each of apparatus 610 and apparatus 620 may include at least some of those components shown in FIG. 6 such as a processor 612 and a processor 622, respectively, for example. Each of apparatus 610 and apparatus 620 may further include one or more other components not pertinent to the proposed scheme of the present disclosure (e.g., internal power supply, display device and/or user interface device), and, thus, such component(s) of apparatus 610 and apparatus 620 are neither shown in FIG. 6 nor described below in the interest of simplicity and brevity.

In one aspect, each of processor 612 and processor 622 may be implemented in the form of one or more single-core processors, one or more multi-core processors, one or more RISC processors or one or more CISC processors. That is, even though a singular term "a processor" is used herein to refer to processor 612 and processor 622, each of processor 612 and processor 622 may include multiple processors in some implementations and a single processor in other implementations in accordance with the present disclosure. In another aspect, each of processor 612 and processor 622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 612 and processor 622 is a special-purpose machine specifically designed, arranged and configured to perform specific tasks including those pertaining to TB implicit feedback for implicit beamforming in wireless communications in accordance with various implementations of the present disclosure.

In some implementations, apparatus 610 may also include a transceiver 616 coupled to processor 612. Transceiver 616 may include a transmitter capable of wirelessly transmitting and a receiver capable of wirelessly receiving data. In some implementations, apparatus 620 may also include a transceiver 626 coupled to processor 622. Transceiver 626 may include a transmitter capable of wirelessly transmitting and a receiver capable of wirelessly receiving data. It is noteworthy that, although transceiver 616 and transceiver 626 are illustrated as being external to and separate from processor 612 and processor 622, respectively, in some implementations, transceiver 616 may be an integral part of processor 612 as a system on chip (SoC), and transceiver 626 may be an integral part of processor 622 as a SoC.

In some implementations, apparatus 610 may further include a memory 614 coupled to processor 612 and capable of being accessed by processor 612 and storing data therein. In some implementations, apparatus 620 may further include a memory 624 coupled to processor 622 and capable of being accessed by processor 622 and storing data therein. Each of memory 614 and memory 624 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 614 and memory 624 may include a type of read-only memory (ROM) such as mask ROM, programmable ROM (PROM), erasable programmable ROM (EPROM) and/or electrically erasable programmable ROM (EEPROM). Alternatively, or additionally, each of memory 614 and memory 624 may include a type of non-volatile random-access memory (NVRAM) such as flash memory, solid-state memory, ferroelectric RAM (FeRAM), magnetoresistive RAM (MRAM) and/or phase-change memory.

Each of apparatus 610 and apparatus 620 may be a communication entity capable of communicating with each other using various proposed schemes in accordance with the present disclosure. For illustrative purposes and without limitation, a description of capabilities of apparatus 610, as STA 110, and apparatus 620, as STA 120, is provided below in the context of example process 700. It is noteworthy that, although a detailed description of capabilities, functionalities and/or technical features of either of apparatus 610 and apparatus 620 is provided below, the same may be applied to the other of apparatus 610 and apparatus 620 although a detailed description thereof is not provided solely in the interest of brevity. It is also noteworthy that, although the example implementations described below are provided in the context of WLAN, the same may be implemented in other types of networks.

### Illustrative Processes

FIG. 7 illustrates an example process 700 in accordance with an implementation of the present disclosure. Process 700 may represent an aspect of implementing various proposed designs, concepts, schemes, systems and methods described above. More specifically, process 700 may represent an aspect of the proposed concepts and schemes pertaining to TB implicit feedback for implicit beamforming in wireless communications in accordance with the present disclosure. Process 700 may include one or more operations, actions, or functions as illustrated by one or more of blocks 710, 720 and 730. Although illustrated as discrete blocks, various blocks of process 700 may be divided into additional blocks, combined into fewer blocks, or eliminated, depending on the desired implementation. Moreover, the blocks/sub-blocks of process 700 may be executed in the order shown in FIG. 7 or, alternatively, in a different order. Furthermore, one or more of the blocks/sub-blocks of process 700 may be executed repeatedly or iteratively. Process 700 may be implemented by or in apparatus 610 and apparatus 620 as well as any variations thereof. Solely for illustrative purposes and without limiting the scope, process 700 is described below in the context of apparatus 610 implemented in or as STA 110 functioning as an AP STA and apparatus 620 implemented in or as STA 120 functioning as a non-AP STA of a wireless network such as a WLAN in network environment 100 in accordance with one or more of IEEE 802.11 standards. Process 700 may begin at block 710.

At 710, process 700 may involve processor 612 of apparatus 610, as an AP STA, triggering, via transceiver 616, each of one or more STAs (including apparatus 620 as a non-AP STA) to transmit a respective feedback. Process 700 may proceed from 710 to 720.

At 720, process 700 may involve processor 612 estimating a respective steering matrix with respect to each of the one or more STAs based on the respective feedback. Process 700 may proceed from 720 to 730.

At 730, process 700 may involve processor 612 transmitting, via transceiver 616, a respective steered data to each of the one or more STAs based on the respective steering matrix.

In some implementations, in triggering, process 700 may involve processor 612 controlling a number of Nₛₜₛ and an UL BW of a respective TB-PPDU transmitted by each of the one or more STAs as the respective feedback.

In some implementations, in controlling the number of Nₛₜₛ and the UL BW of the respective TB-PPDU, process 700 may involve processor 612 indicating the number of Nₛₜₛ and the UL BWin a user information field of a respective trigger frame transmitted to each of the one or more STAs. In some implementations, the respective trigger frame may include a basic trigger frame, a BSRP, a BFRP, a BQRP, or a NFRP.

In some implementations, in estimating the respective steering matrix, process 700 may involve processor 612 calculating a full characterization of a MIMO channel in which the respective feedback is transmitted based on the respective TB-PPDU.

In some implementations, in triggering each of the one or more STAs, process 700 may involve processor 612 transmitting to each of the one or more STAs the following: (a) an NDPA; (b) an NDP; and (c) a respective trigger frame. In some implementations, in response to the one or more STAs comprising multiple STAs, the NDPA may include a respective AID of each of the multiple STAs. Moreover, in response to the one or more STAs comprising a single STA, the NDPA may include a first AID of the single STA and a second AID from one or more reserved AIDs.

In some implementations, a communication between the apparatus and the one or more STAs may involve either a single-link operation (SLO) or a multi-link operation (MLO).

In some implementations, the one or more STAs may include one or more STAs compliant with Wi-Fi 6, Wi-Fi 7, Wi-Fi 8, or another Wi-Fi standard based on an IEEE 802.11 specification beyond Wi-Fi 8.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (700), comprising:
triggering (710), by a processor (612) of an apparatus (610), each of one or more stations (620), STAs, to transmit a respective feedback; and
estimating (720), by the processor (612), a respective steering matrix with respect to each of the one or more STAs (620) based on the respective feedback.

2. The method (700) of Claim 1, wherein the triggering (710) comprises controlling a number of space-time streams, Nₛₜₛ, and an uplink bandwidth, UL BW, of a respective trigger-based physical-layer protocol data unit, TB-PPDU, transmitted by each of the one or more STAs (620) as the respective feedback.

3. The method (700) of Claim 2, wherein the controlling of the number of Nₛₜₛ and the UL BW of the respective TB-PPDU comprises indicating the number of Nₛₜₛ and the UL BW in a user information field of a respective trigger frame transmitted to each of the one or more STAs (620).

4. The method (700) of Claim 3, wherein the respective trigger frame comprises a basic trigger frame, a buffer status report poll, BSRP, a beamforming report poll, BFRP, a bandwidth query report poll, BQRP, or a null data packet, NDP, feedback report poll, NFRP.

5. The method (700) of Claim 2, wherein the estimating (720) of the respective steering matrix comprises calculating a full characterization of a multiple-input-multiple-output, MIMO, channel in which the respective feedback is transmitted based on the respective TB-PPDU.

6. The method (700) of Claim 1, wherein the triggering (710) of each of the one or more STAs (620) comprises transmitting to each of the one or more STAs (620):
a null data packet announcement, NDPA;
a null data packet, NDP; and
a respective trigger frame.

7. The method (700) of Claim 6, wherein:
responsive to the one or more STAs (620) comprising multiple STAs, the NDPA comprises a respective association identifier, AID, of each of the multiple STAs, and
responsive to the one or more STAs (620) comprising a single STA, the NDPA comprises a first AID of the single STA and a second AID from one or more reserved AIDs.

8. The method (700) of Claim 1, wherein a communication between the apparatus (610) and the one or more STAs (620) involves either a single-link operation, SLO, or a multi-link operation, MLO; or wherein the one or more STAs (620) comprise one or more STAs compliant with Wi-Fi 6, Wi-Fi 7, Wi-Fi 8, or another Wi-Fi standard based on an Institute of Electrical and Electronics Engineers, IEEE, 802.11 specification beyond Wi-Fi 8; or wherein the method (700) further comprises transmitting (730), by the processor (612), a respective steered data to each of the one or more STAs (620) based on the respective steering matrix.

9. An apparatus (610), comprising:
a transceiver (616) configured to communicate wirelessly; and
a processor (612) coupled to the transceiver (616) and configured to perform operations comprising:
triggering (710), via the transceiver (616), each of one or more stations (620), STAs, to transmit a respective feedback; and
estimating (720) a respective steering matrix with respect to each of the one or more STAs (620) based on the respective feedback.

10. The apparatus (610) of Claim 9, wherein the triggering (710) comprises controlling a number of space-time streams, Nₛₜₛ, and an uplink bandwidth, UL BW, of a respective trigger-based physical-layer protocol data unit, TB-PPDU, transmitted by each of the one or more STAs (620) as the respective feedback.

11. The apparatus (610) of Claim 10, wherein the controlling of the number of Nₛₜₛ and the UL BW of the respective TB-PPDU comprises indicating the number of Nₛₜₛ and the UL BW in a user information field of a respective trigger frame transmitted to each of the one or more STAs (620).

12. The apparatus (610) of Claim 11, wherein the respective trigger frame comprises a basic trigger frame, a buffer status report poll, BSRP, a beamforming report poll, BFRP, a bandwidth query report poll, BQRP, or a null data packet, NDP, feedback report poll, NFRP.

13. The apparatus (610) of Claim 10, wherein the estimating (720) of the respective steering matrix comprises calculating a full characterization of a multiple-input-multiple-output, MIMO, channel in which the respective feedback is transmitted based on the respective TB-PPDU.

14. The apparatus (610) of Claim 9, wherein the triggering (710) of each of the one or more STAs (620) comprises transmitting to each of the one or more STAs (620):
a null data packet announcement, NDPA;
a null data packet, NDP; and
a respective trigger frame;
optionally wherein:
responsive to the one or more STAs (620) comprising multiple STAs, the NDPA comprises a respective association identifier, AID, of each of the multiple STAs, and
responsive to the one or more STAs (620) comprising a single STA, the NDPA comprises a first AID of the single STA and a second AID from one or more reserved AIDs.

15. The apparatus (610) of Claim 9, wherein a communication between the apparatus (610) and the one or more STAs (620) involves either a single-link operation, SLO, or a multi-link operation, MLO; or wherein the one or more STAs (620) comprise one or more STAs compliant with Wi-Fi 6, Wi-Fi 7, Wi-Fi 8, or another Wi-Fi standard based on an Institute of Electrical and Electronics Engineers, IEEE, 802.11 specification beyond Wi-Fi 8; or wherein the processor (612) is further configured to perform operations comprising: transmitting (730), via the transceiver (616), a respective steered data to each of the one or more STAs (620) based on the respective steering matrix.
